# EUROPEAN PATENT APPLICATION

(11) **EP 4 380 171 A1**
(43) Date of publication of application: **05.06.2024**
(21) Application number: 22914119.7
(22) Date of filing: 07.12.2022
(51) Int. Cl.: H04N 21/472

(54) **INTERACTION METHOD, SYSTEM, AND ELECTRONIC DEVICE**

(30) Priority: 29.12.2021 CN 202111640926
(71) Applicant: Alibaba (China) Co., Ltd., Hangzhou, Zhejiang 311121 (CN)
(72) Inventor: SHI, Wen, Hangzhou, Zhejiang 310052 (CN)
(74) Representative: Patentgruppen A/S
(86) International application number: PCT/CN2022/137344
(87) International publication number: WO 2023/124864

(57) **Abstract**

Embodiments of the present application provide an interaction method, system and electronic device. The method includes: playing an audio/video; displaying an interactive control reflecting a playback progress in a playback interface of the audio/video; determining, in response to an interactive operation triggered by a user through the interactive control, interaction information and the playback progress when the interactive operation is triggered; and sending, based on the interaction information and the playback progress, the user's interaction data for audio/video segments to a server terminal, to enable the server terminal to obtain respective interaction data triggered by different users for different segments of the audio/video. Using the technical solutions provided by the present application, users can interact with one or multiple segments of an audio/video, which will help to obtain user interaction popularities for different segments, guide the users to watch or listen, and reduce the probability of missing exciting segments. In addition, to a certain extent, this will also help improve indicators such as the number of times of playing audio/video and the number of playing content, etc.

## Description

This disclosure claims priority to the Chinese patent application filed with the China Patent Office on December 29, 2021, with Application Number as 202111640926.3 and Title as "Interaction method, System and Electronic Device," which is incorporated herein by reference in its entirety.

### Technical Field

The present application relates to the field of computer technology, and in particular to interactions methods, systems and electronic devices.

### Background

With the development and popularization of Internet technology, many users watch videos and audios to entertain themselves in their spare time. Users often drag a progress bar or choose to watch at double speed to skip uninteresting segments when watching long videos or audios (such as TV series, variety shows, movies, music, etc.). At the same time, while watching a video, giving a like to a point of interest in the audio/video is also made through a fixed "like" control provided by the video.

The popularity of an audio/video can be known by the total number of likes. Users can decide whether to watch a video or listen to an audio based on its popularity. It is possible that a user decides to watch a video, but is not interested in certain clips. He/she drags a progress bar to jump to any playback point in the video, and ultimately misses the highlights.

### Summary

In view of the above problems, the present application provides an interaction method, system and electronic device that solves the above problems or at least partially solves the above problems.

In an embodiment of the present application, an interaction method is provided. The method includes:
playing an audio/video;
displaying an interactive control reflecting a playback progress in a playback interface of the audio/video;
determining, in response to an interactive operation triggered by a user through the interactive control, interaction information and the playback progress when the interactive operation is triggered; and
sending, based on the interaction information and the playback progress, the user's interaction data for audio/video segments to a server terminal, to enable the server terminal to obtain respective interaction data triggered by different users for different segments of the audio/video.

In another embodiment of the present application, an interaction method is also provided. The method includes:
obtaining interaction data triggered by different users for different segments of an audio/video, and obtain an interaction data set related to the audio/video;
determining respective user interaction popularities corresponding to different segments of the audio/video based on the interaction data set;
generating streaming media data of the audio/video based on the respective user interaction popularities corresponding to the different segments of the audio/video and audio/video data of the audio/video, to enable a client device to display perceptible information reflecting the respective user interaction popularities corresponding to the different segments of the audio/video in a playback interface of the audio/video based on the streaming media data that is downloaded.

In yet another embodiment of the present application, an interaction system is also provided. The system includes:
a client terminal configured to play an audio/video; display an interactive control reflecting a playback progress in a playback interface of the audio/video; determine, in response to an interactive operation triggered by a user through the interactive control, interaction information and the playback progress when the interactive operation is triggered; and send the user's interaction data for a segment of the audio/video to a server based on the interaction progress and the playback progress; and
a server terminal configured to obtain interaction data triggered by different users for different segments of the audio/video, and obtain an interaction data set related to the audio/video; determine user interaction popularities corresponding to the different segments of the audio/video based on the interaction data set; and generate streaming media data of the audio/video based on the user interaction popularities corresponding to the different segments of the audio/video and audio/video data of the audio/video, to enable the client device to display perceptible information reflecting the user interaction popularities corresponding to the different segments of the audio/video in the playback interface of the audio/video based on the streaming media data that is downloaded.

In yet another embodiment of the present application, an interaction method is also provided. The method includes:
playing an audio/video;
displaying a progress bar in a playback interface of the audio/video;
displaying, in response to an interactive operation triggered by a user on the playback interface, user-perceivable information corresponding to the interactive operation at a position of playback progress on the progress bar; and
determining the user's interaction data for a segment of the audio/video according to interaction information corresponding to the interactive operation and the playback progress when the interactive operation is triggered.

In an embodiment of the present application, an electronic device is provided. The electronic device includes a processor and a memory, wherein the memory is configured to store one or more computer instructions; the processor is coupled to the memory and is configured to implement the steps in each of the above interaction method embodiments using the one or more computer instructions.

It needs to be noted in advance that the audio/video mentioned in the embodiments of the present application may be an audio, a video, or multimedia data containing both audio and video.

In the technical solutions provided by the embodiments of the present application, a playback interface of an audio/video played by a client displays an interactive control that reflects a playback progress. A user can trigger an interactive operation on a segment of the audio/video through the interactive control, which facilitates the establishment of a relationship between a user interaction and the segment of the audio/video. Furthermore, in response to an interactive operation triggered by the user through the interactive control, the client can determine interaction information and a playback progress when the interactive operation is triggered, and send the user's interaction data for the segment of the audio/video to a server based on the interaction information and the playback progress, so that the server can obtain respective interaction data triggered by different users for different segments of the audio/video. The server can obtain an interaction data set related to the audio/video based on the obtained interaction data triggered by the different users for the different segments of the audio/video, and determine user interaction popularities corresponding to the different segments of the audio/video based on the interaction data set. The user interaction popularities corresponding to the different segments of the audio/video can be provided to the user of the client for reference. In other words, the server can generate streaming media data of the audio/video based on the user interaction popularities corresponding to the different segments of the audio/video and audio/video data of the audio/video, to facilitate the client to display perceptible information reflecting the user interaction popularities corresponding to the different segments of the audio/video in the audio/video playback interface based on the streaming media data that is downloaded. The perceptible information displayed reflects the user interaction popularities corresponding to the different segments of the audio/video, which can help users to know the popularities of the different segments of the audio/video, help provide auxiliary reference for the users to browse the audio/video, and avoid blindly fast forwarding the audio/video and missing out highlights. In addition, using the solutions provided by the embodiments of the present application, the probability of missing out highlights by the users is reduced, which to a certain extent also helps to increase the users' interest in the audio/video, and also helps to increase the number of times that the audio/video is played and the number of times that the content is played, and other indicators.

In some other scenarios, the interactive control may not be displayed in the playback interface. The user can directly trigger an interactive operation (such as double-click, a sliding operation, etc.) on the playback interface. In response to the interactive operation triggered by the user on the playback interface, the client can display user-perceivable information corresponding to the interactive operation at the playback progress on the progress bar, and determine the user's interaction data response for the audio/video segment based on interaction information corresponding to the interactive operation and the playback progress when the interactive operation is triggered, to facilitate uploading the user's interaction data for the audio/video segment to the server.

### Brief Description of the Drawings

In order to more clearly explain the embodiments of the present application or the technical solutions in existing technologies, accompanying drawings that need to be used for describing the embodiments or the existing technologies will be briefly described as follows. Apparently, accompanying the drawings in the following description represent some embodiments of the present application. For one of ordinary skill in the art, other drawings can be obtained based on these drawings without making any creative effort.
FIG. 1 shows a schematic flowchart of an interaction method provided by an embodiment of the present application.
FIG. 2 shows a schematic diagram of the principle of audio/video interaction provided by an embodiment of the present application.
FIG. 3 shows a schematic structural diagram of an interaction system provided by an embodiment of the present application.
FIG. 4 shows a schematic flowchart of an interaction method provided by another embodiment of the present application.
FIG. 5 shows a schematic flowchart of an interaction method provided by yet another embodiment of the present application.
FIG. 6 shows a schematic diagram of the principle of audio/video interaction provided by another embodiment of the present application.
FIG. 7 shows a schematic structural diagram of an interaction apparatus provided by an embodiment of the present application.
FIG. 8 shows a schematic structural diagram of an interaction apparatus provided by another embodiment of the present application.
FIG. 9 shows a schematic structural diagram of an interaction apparatus provided by yet another embodiment of the present application.
FIG. 10 shows a schematic structural diagram of an electronic device provided by an embodiment of the present application.

### Detailed Description

In order to enrich existing audio/video interaction methods, various embodiments of the present application provide an audio/video interaction solution. A user can interact with one or more clips, such as like operations, negative review operations, etc. In an implementation of this solution, a progress bar corresponding to an audio/video that is playing is related to an interactive control (such as a like control). The interactive control can reflect the progress of the audio/video playback, which is conducive to integrating user interaction with the audio/video. Fragments establish relationships. In addition, this solution can also display perceptible information reflecting user interaction popularities corresponding to different segments of the audio/video in an audio and video playback interface, such as a buffering progress bar displayed on a progress bar in the playback interface. In this way, when watching the video, the user can determine the popularity of the corresponding video segment though the perceptible information displayed on the buffering progress bar. This helps to serve as an auxiliary reference when the user browses the audio/video, avoiding blindly fast forwarding the audio/video and missing the highlights. In addition, this solution is also conducive to improving audio/video indicators such as VV (Video View, number of times of playing) and CV (Content Views, number of times of playing the content) to a certain extent. VV refers to a sum of the numbers of times that a video is opened within a statistical period. CV refers to a sum of the numbers of times that a video is opened and the main content of the video (excluding advertisements) is successfully played within a statistical period. Since users are lost while an advertisement is playing, the value of CV is smaller than the value of VV.

In order to enable one skilled in the art to better understand the solution of the present application, the technical solution in the embodiments of the present application will be clearly and completely described below in conjunction with the accompanying drawings in the embodiments of the present application. What needs to be explained here again is that the audio/video mentioned in the embodiments of the present application may be an audio, a video, or multimedia data including both audio and video.

Some processes described in the specification, claims, and the above-mentioned drawings of the present application include multiple operations that appear in a specific order. These operations may not be performed in an order in which they appear in this article or may be performed in parallel. The sequence numbers of operations, such as 101, 102, etc., are only used to distinguish different operations. These sequence numbers themselves do not represent any order of execution. Additionally, these processes may include more or fewer operations, and these operations may be performed sequentially or in parallel. It needs to be noted that descriptions such as "first," and "second," etc., in this article are used to distinguish different modules, models, devices, etc., and do not represent an order of precedence, nor do they limit "first" and "second" to be different types. In addition, the following embodiments represent only some and not all of the embodiments of the present application. Based on the embodiments in the present application, all other embodiments obtained by one skilled in the art without making any creative effort shall fall within the scope of protection of the present application.

The interaction methods provided by various embodiments of the present application are described below.

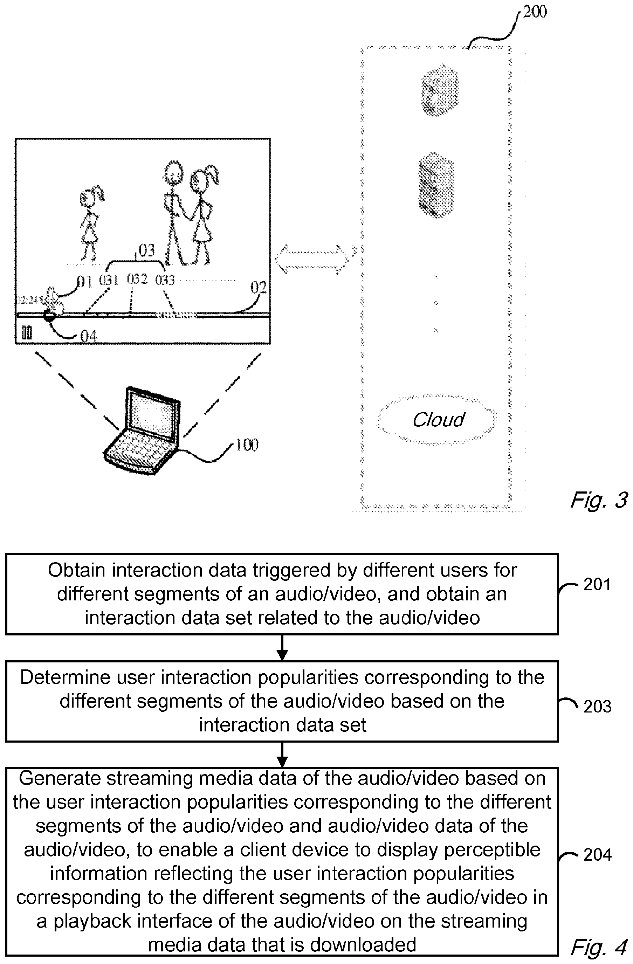

The interaction methods provided by the embodiments of the present application as follows can be applied to a system architecture composed of at least one client device and a server terminal (such as a server). As shown in the system architecture shown in FIG. 3, a client terminal 100 and a server terminal 200 conduct communications and connections through a network. In at least one embodiment of the present application, data transmission is performed between the client terminal 100 and the server terminal 200 according to a preset protocol. The preset protocol may include, but is not limited to, any one of the following: a HTTP protocol (Hyper Text Transfer Protocol), a HTTPS protocol (Hyper Text Transfer Protocol over Secure Scocket Layer, a HTTP protocol that aims at security), etc. In at least one embodiment of the present application, the server terminal 200 may be a single server, a server group composed of multiple functional servers, or may be a virtual server or a cloud, etc. The client terminal 100 can be any electronic device with a network connection function. For example, the client terminal 100 can be a mobile device such as a personal computer, a tablet, a smartphone, a personal digital assistant (PAD), a smart wearable device, etc., or a fixed device such as a desktop computer, a digital TV, etc. An audio/video playback application is installed in the client terminal 100. After the audio/video playback application is run, a user can watch audio/video (such as TV series, movies, variety shows, music, etc.), and the user is allowed to perform operations such as giving likes, giving negative feedback, posting comments (such as bullet comments), etc., on the audio/video through interactive controls (such as like controls and comment controls) that move and follow a progress indicator on a progress bar displayed on an audio/video playback interface. Furthermore, interaction information generated by user's operations such as giving likes, giving negative feedback, posting comments, etc. through the interactive controls and corresponding playback progresses when the user triggers the interactive controls (such as certain playback moments of a video, 1 minute and 50 seconds, 10 minutes, 00 seconds, etc., or frame identifiers) will also be sent to the server terminal 200 as user interaction information for corresponding audio/video segments, so that the server terminal 200 can collect respective user interaction data triggered by different users for different segments of the audio/video.. In addition, the audio/video playback application generally uses a buffering method while playing. Correspondingly, a buffering progress bar is displayed on a progress bar of the audio/video. The technical solution provided by the present application displays the buffering progress bar in segments when displaying the buffering progress bar, and different buffered segments also display different or identical display attributes. Such display attributes are related to user interaction popularities. The user interaction popularities are determined by the server terminal 200 based on the collected user interaction data that is triggered by different users for different segments of the audio/video. In this way, when the user watches the video, a user interaction popularity corresponding to a subsequent segment to be played can be clarified by using display attributes corresponding to at least one buffered segment of the buffer progress bar. As such, a determination of whether to perform an operation such as double-speed playback, dragging the progress bar, etc., on the audio/video segment to be played is made based on the user interaction popularity, thus quickly reaching a playback point that he/she is interested in.

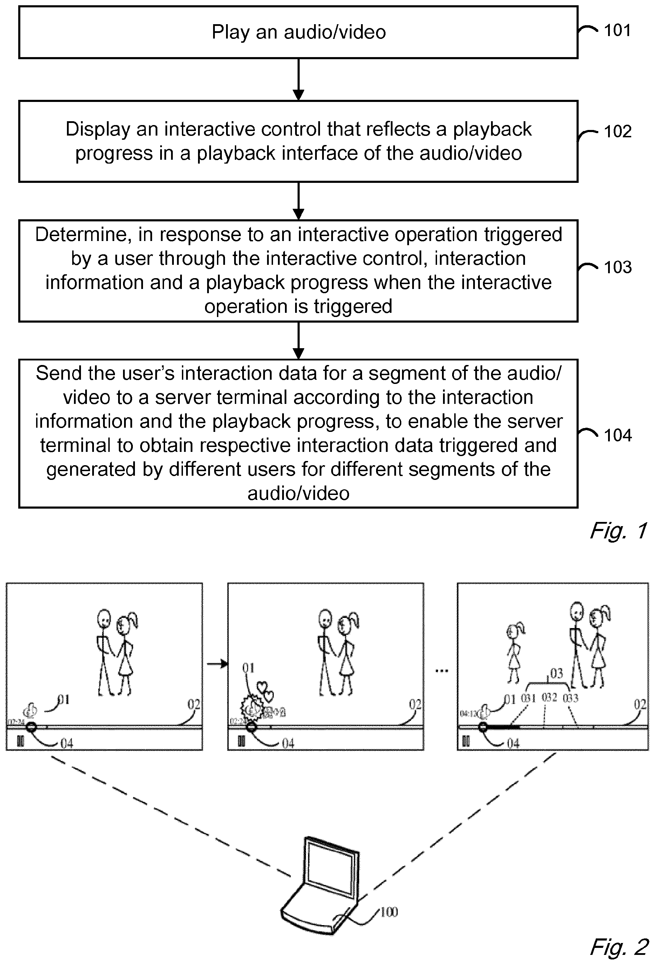

For example, as shown in FIG. 3 and FIG. 2, user A uses his own client terminal (such as a laptop, a mobile phone, etc.) to watch an audio/video (such as a TV series, a movie), and feels that the currently playing content is very interesting when the currently playing video content is watched. At this time, user A can trigger a like operation though an interactive control 01 (such as a like control) that moves and follows a progress indicator 04 on a progress bar 02 for the currently playing content. After user A completes the like operation, the client terminal 100 can obtain like data generated by the user's like and a corresponding current audio/video playback progress (such as a certain playback time moment of audio/video, 2 minutes and 24 seconds, 10 minutes and 00 seconds, etc., or a frame identifier), as interaction data of user A for a segment corresponding to the playback progress, and send the interaction data to the server terminal, so that the server terminal can obtain respective interaction data triggered by different users for different segments of the audio/video. At this time, the progress bar 02 also displays a buffering progress bar 03 that marks and corresponds to the buffered audio/video data. The buffering progress bar 03 includes three buffered segments, namely a first buffered segment 031, a second buffered segment 032, and a third buffered segment 033. These three buffered segments use different grayscale colors to represent display attributes of the buffered segments. The darker the grayscale, the higher the user interaction popularity for the audio/video segment to be played corresponding to that buffer end. A higher user interaction popularity can mean that the audio/video content is more remarkable and interesting. At this time, while continuing to watch the audio/video, through specific grayscale colors of the first buffered segment 031, the second buffered segment 032, and the third buffered segment 033, user A is clear that the second buffered segment 032 has low a user interaction popularity, indicating that an audio/video segment that is to be played and corresponds to the second buffered segment 032 is less exciting than audio/video segments that are to be played and correspond to the first buffered segment 031 and the second buffered segment 033. After watching the audio/video segment corresponding to the first buffered segment 031, the user can directly skip the audio/video segment corresponding to the second buffered segment 032 by selecting a higher playback speed or dragging a progress icon for the audio/video segment corresponding to the second buffered segment 032, and directly watch the audio/video segment corresponding to buffered segment 033.

The example listed above is about a user giving a like to the audio/video content being played through an interactive control (such as a like control). In essence, other than giving likes, posting comments on the played audio/video content may also be performed. In this case, the interactive control can be a comment control. The comment control moves with the progress indicator on the progress bar. After the user triggers the comment control, a pop-up text box for inputting comment content is popped up, to allow the user to enter the comment content for posting. This example is not shown in the accompanying figure. When introducing the technical solution provided by the present application below, a like control is mainly used as an example of the interactive control. In addition, in the above description, a user interaction popularity corresponding to an audio/video segment is determined by the server terminal based on obtained interaction data generated by different users for different audio/video segments. Details of a process of determination can be found in the relevant content below.

The present application also provides multiple method embodiments. The specific execution content of each terminal (such as a client terminal and a server terminal) under the above system architecture will be described in the following embodiments. It needs to be noted that an execution subject of the interaction methods provided in the following embodiments is a client terminal or a server terminal. In addition, exemplary interaction apparatuses will also be provided below, and an interaction apparatus is generally installed in a client terminal and/or a server terminal.

FIG. 1 shows a schematic flowchart of an interaction method provided by an embodiment of the present application. An execution subject of the method provided in this embodiment is the client terminal shown in FIG. 2 or FIG. 3. The client terminal may be, but is not limited to, a smartphone, a PC (personal computer), a mobile computer, a tablet computer, a personal digital assistant (PAD), a smart TV, a smart wearable device (such as a smart bracelet, a smart wearable device embedded in clothes, shrinkable clothing accessories, etc.), which is not limited herein. As shown in FIG. 1, the interaction method includes the following steps:
101: Play an audio/video.
102: Display an interactive control that reflects a playback progress in a playback interface of the audio/video.
103: Determine, in response to an interactive operation triggered by a user through the interactive control, interaction information and a playback progress when the interactive operation is triggered.
104: Send the user's interaction data for a segment of the audio/video to a server terminal according to the interaction information and the playback progress, to enable the server terminal to obtain respective interaction data triggered and generated by different users for different segments of the audio/video.

In the above steps 101 to 102, the audio/video that is played can be an audio/video that is played online or a local audio/video file that is played offline. Before or during the playback of the audio/video, various types of preprocessing, such as resolution adjustment, etc., can be performed on frame images in the audio/video to enable adaptation to playback on the client terminal. If the user does not perform any preprocessing on the frame images in the audio/video, the audio/video will be played with the default configuration information.

In order to effectively associate user interaction information with video playback progress, the user can also clearly understand the audio/video playback progress when he/she gives like or comment on the video through an interactive control. The technical solution provided in this embodiment displays an interactive control reflecting the playback progress in an audio/video playback interface. The interactive control may be, but are not limited to: a like control, a comment control, etc. FIG. 3 shows a case where the interactive control is a like control.

Generally, during a playback of audio/video, a progress bar is displayed in an audio/video playback interface, and a movable progress indicator is also displayed on the progress bar. The position of the progress indicator on the progress bar can reflect the playback progress of the audio/video. Based on this, the interactive control can be made to move and follow with a progress indicator on the progress bar, to implement the function of the interactive control that reflects the playback progress. Furthermore, the method provided by this embodiment may also include the following steps:
S11: Display a progress bar and a progress indicator that moves on the progress bar to reflect the playback progress in the playback interface of the audio/video.
S12: Display the interactive control linked with the progress indicator.

In specific implementations, as shown in FIG. 2 or FIG. 3, a progress bar 02 relative to the currently played audio/video can be displayed at the lower part of the playback interface of the audio/video, and a movable progress indicator 04 corresponding to the playback progress of the currently played audio/video is displayed on the progress bar 02 to remind the user of the playback progress of the current audio/video. A specific shape of the progress indicator 04 may be an indication circle (as shown in FIG. 3), an indication rectangle, an indication triangle, etc., which is not limited herein. Since the progress bar 04 moves at certain speed and direction when moving on the progress bar 02, for this reason, in order to realize the interactive control 01 to follow the progress bar, the interactive control 01 and the progress bar 04 can be associated, and the movement of interactive control 01 is controlled according to the moving speed and moving direction of the progress indicator 04 that are obtained.

In other words, in a specific implementable technical solution, "display the interactive control linked with the progress bar" in S12 above may can specifically include the following steps:
S121: Display the interactive control around the progress indicator.
S122: Obtain a moving speed and a moving direction of the progress indicator.
S 123 : Control a movement of the interactive control according to the moving speed and the moving direction.

In specific implementations, the interactive control can be displayed on the upper, lower, left, or right part of the progress indicator. However, in order to prevent the interactive control from blocking the progress bar, the interactive control can be displayed above or below the progress bar. FIGS. 2 and 3 show a situation where the interactive control 01 is displayed above the progress indicator 04.

During the audio/video playback process, the moving direction of the progress indicator is preset, and its moving direction can move from left to right or from right to left. Normally, in order to conform to public habits, each audio/video playback application sets the progress indicator 04 to move from left to right (such as FIG. 2 and FIG. 3). The moving speed of the progress indicator is often related to the network condition of the client device, the playback resolution of the audio/video selected by the user, etc. Having a corresponding built-in calculation strategy for calculating the moving speed of the progress indicator itself, the audio/video playback application calculates the moving speed of the progress indicator according to the built-in calculation strategy after obtaining the network condition of the client device where it is located and the playback resolution of the audio/video, and controls the movement of the progress indicator according to the moving speed and moving direction. According to the technical solution provided by this embodiment, the audio/video playback application not only determines the moving speed and moving direction of the progress indicator to control the movement of the progress indicator, but also controls the movement of the interactive control based on the moving speed and moving direction of the progress indicator to realize that the interactive control follows the progress indicator to move, so that the interactive control can not only provide the user with audio/video interaction functions, but also reflect the audio/video playback progress.

In this embodiment, the interactive control is linked with the progress indicator. Firstly, this is relatively intuitive, and secondly, it is convenient for the user to operate. The reason why linking the interactive control and the progress indicator can facilitate user operations. For example, the user attentively watches a movie because the plot of the movie is very exciting, and does not perform any operations on the playback interface. Under normal circumstances, when there is no operation on the playback interface for a period of time, information such as the progress bar, the controls, the time, the movie title, etc. on the playback interface is hidden. When the user finishes watching the entire movie, he/she feels that certain segments are very exciting during a relive process, and want to give a like to a certain segment. At this time, the user can click on the playback interface, and the progress bar, the progress indicator, and the interactive control linked to the progress indicator are all displayed on the playback interface. The user directly drags the interactive control. Due to the linkage relationship between the progress indicator and the interactive control, the progress indicator moves to a place of playback progress corresponding to the segment that the user wants to play back and give a like, and then let go to complete the like operation. The user does not need to move the progress bar and then trigger the interactive operation elsewhere on the interface.

Many audio/video applications, such as music applications, video applications, etc., mostly use streaming media data for transmission. Streaming media refers to continuous time-based media, such as audio, video, animation, or other multimedia files, that is transmitted over a network using streaming technology. The main feature of streaming media data is the transmission of multimedia data in a form of streams, and viewers or listeners can enjoy thereof while downloading. The downloaded streaming media data is cached in a buffer of a user's client terminal. The cached data in the buffer can be called buffered data. Specifically, when a user watches an online audio/video, the audio/video playback application will also continuously download the streaming media data from the server (such as a CDN node) and cache it in the local buffer when providing the user with the video playback function, thus achieving watching and download at the same time. Correspondingly, a buffering progress bar corresponding to the buffered video data to be played is also displayed on the progress bar. In existing technical solutions, the buffering progress bar displayed on the progress bar can only roughly indicate the playback time length corresponding to audio/video data that has been buffered for the currently played audio/video. The user cannot clearly know information such as excitement, interestingness, etc. of the audio/video data to be played through the buffering progress bar. This will cause the user to be uninterested in the currently played audio/video content and to choose to skip the uninteresting point by manually dragging the progress indicator. At this time, dragging the progress indicator is blind, and may cause ourself to miss out his/her interesting point.

In response to the above problems, in the technical solution provided by this embodiment, the buffering progress bar is displayed in a form of segments. The buffering progress bar may include at least one buffered segment, and one buffered segment corresponds to one buffered audio/video segment to be played. At the same time, display attribute(s) corresponding to each displayed buffered segment is/are related to a user interaction popularity. The user interaction popularity can be determined by the server terminal based on obtained interaction data (such as like data, comment data, etc.) triggered and generated by different users for different segments of the audio/video. In this way, while watching the video, The user can understand user interaction information corresponding to a respective subsequent segment to be played using display attributes of each buffered segment the buffering progress bar, thereby indirectly clarifying the excitement of the segment to be played, etc., and providing an auxiliary reference for the user to drag the progress indicator. Furthermore, the technical solution provided by this embodiment may also include the following steps:
S21: Obtain buffered data corresponding to the audio/video in a buffer.
S22: Determine at least one buffered segment of the buffering progress bar and display attributes of the buffered segment based on the buffered data, wherein the display attributes are related to user interaction popularity.
S23: Display the buffering progress bar with the at least one buffered segment on the progress bar according to rules of different display methods corresponding to different display attributes.

In S21 above, the buffered data corresponding to the audio/video in the buffer can be streaming media data corresponding to the audio/video received from and transmitted by the server terminal through the network when the audio/video playback application provides the user with the audio/video playback function. The streaming media data is stored in a local buffer queue (that is, the buffer in this embodiment). When the buffered streaming media data needs to be played, various types of decoders can be called on each frame of the streaming media data to reconstruct the original data format, which can be played and output on the audio/video application after synchronization.

In S22 above, the buffered data corresponding to the audio/video obtained from the buffer through step S21 may include not only at least one segment to be played, but also information representing the user interaction popularity corresponding to such segment to be played. When the buffered data corresponding to the corresponding audio/video is reflected through the buffering progress bar, in order to reflect a corresponding segment to be played through a buffered segment of the buffering progress bar, the buffered segment and the segment to be played need to be quantitatively consistent. The length of the buffering progress bar can be known. On this basis, the length of the buffered segment corresponding to the segment to be played can be determined based on a data amount of at least one segment to be played included in the buffered data, so as to realize segmentation of the buffering progress bar to obtain at least one buffered segment corresponding to the at least one segment to be played, and determine display attributes of the at least one buffered segment based on information of a respective user interaction popularity of the at least one segment to be played. In other words, the buffered data may include at least one segment to be played and information representing a user interaction popularity corresponding to the segment to be played. Accordingly, the following steps can be used to achieve the above S22 of "determine at least one buffered segment of the buffering progress bar and display attributes of the buffered segment based on the buffered data":
S221: Determine, based on a data amount of at least one segment to be played included in the buffered data, a length of the buffered segment corresponding to the segment to be played.
S23: Determine, based on information included in the buffered data that represents a user interaction popularity of the segment to be played, display attribute(s) of the corresponding buffered segment.

In S221 above, a data amount of a segment to be played represents the size of the segment to be played, and the corresponding data amount can be calculated based on an audio bit rate, a video bit rate, and a corresponding duration of the segment to be played. Specifically,
a calculation formula of a data amount M of a segment to be played is as follows: (audio bit rate + video bit rate) * duration / 8. After obtaining the data amount of the segment to be played, a length L of the buffered segment corresponding to the segment to be played can be calculated based on a data amount m corresponding to a length of a unit progress bar, that is, L=M/m.

In S23 above, the display attribute(s) of the buffered segment may be, but are not limited to: a color, a pattern, etc. For example, different colors can be used to reflect corresponding user interaction popularities of segments to be played. One with a high user interaction popularity is displayed in red, one with a low user interaction popularity is displayed in gray, one with a medium user interaction popularity is displayed in orange, and so on. The user interaction popularities are determined by the server terminal based on obtained interaction data (such as like data, comment data, etc.) triggered and generated by different users for different segments of the audio/video. Through a statistical analysis of the interaction data, such as like data, comment data, etc., corresponding user interaction popularities of different audio/video segments can be determined. In other words, information about a user interaction popularity corresponding to an audio/video segment is related to the number of likes and/or comments triggered by users for that segment. When different colors are used to reflect user interaction popularities corresponding to segments to be played, the user interaction popularities can be reflected by color depth, color lightness, etc. For example, as shown in FIG. 3, if a current playback point is reached when the user watches an audio/video, the buffered data includes three segments to be played (not shown in the figure), which are recorded as a first segment to be played, a second segment to be played, and a third segment to be played 023. Correspondingly, the buffering progress bar is divided based on data amounts of these three segments to be played, and three corresponding buffered segments are obtained respectively, namely a first buffered segment 031, a second buffered segment, and a third buffered segment 033. If a user interaction popularity of the first segment to be played is higher than a user interaction popularity of the third segment to be played, and the user interaction popularity of the third segment to be played is higher than a user interaction popularity of the second segment to be played, display attributes of the user interaction popularities of each buffered segment may be: a display attribute of the first buffered segment 031 is dark gray, a display attribute of the second buffered segment 032 is light gray, and a display attribute of the third buffered segment 033 is medium gray. What needs to be described is that a determination of the segments to be played is related to a division of different segments of audio/video. Regarding the division of different segments of audio/video, reference can be made to the relevant content of the following embodiments, which is not described in detail here.

In S23 above, after determining at least one buffered segment of the buffering progress bar and display attribute(s) (such as a color) of the at least one buffered segment, a buffering progress bar with at least one buffered segment can be displayed on the progress bar according to preset display rule(s). For example, continuing the example in S22 above, if a display attribute of a buffered segment is color, the determined display attributes corresponding to the first buffered segment 031, the second buffered segment 032, and the third buffered segment 033 of the buffering progress bar 03 are deep gray, light gray, and medium gray respectively. Corresponding deep gray, light gray, and medium gray can be filled or rendered in the first buffered segment 031, the second buffered segment 032, and the third buffered segment 33 according to the color in corresponding display attribute of each buffered segment, so that the progress bar 02 shown in FIG. 3 is displayed in the audio/video playback interface.

Specific implementations of color filling or color rendering can be referenced to existing content.

In summary, in the technical solution provided by this embodiment, in an audio/video playback interface, an interactive control that follows the movement of a progress indicator on a progress bar is displayed. A user can use the interactive control to achieve interactions with audio/video by giving likes, posting comments, etc., for a corresponding currently played audio/video content. At the same time, on the progress bar in the audio/video playback interface, a buffering progress bar with at least one buffered segment is also displayed. Buffered segments with different display attributes are displayed differently. Since the display attributes are related to user interaction popularities, the displayed buffering progress bar used in this solution can provide an auxiliary reference for users to watch segments to be played.

The user interaction popularities corresponding to different segments of the audio/video can be determined by the server terminal based on obtained interaction data generated by different users triggering interactive controls for different segments of the audio/video. In order to provide the server terminal with the interaction data generated by different users triggering interactive controls for different segments of the audio/video, according to a technical solution provided by this embodiment, after the client device executes the above step 103 to determine the interaction information (such as like data) and the playback progress (such as a certain playback moment of the video, 1 minute 50 seconds, 10 minutes 00 seconds time, etc., or a frame identifier) when the interactive operation is triggered in response to the interactive operation triggered by the user using the interactive control (such as a like control), the client device can further send the user's interaction data for the audio/video segment to the server terminal according to the interaction information and the playback progress, so that the server terminal can obtain interaction data triggered and generated by different users for different segments of the audio/video. Alternatively, the client terminal determines a corresponding segment locally based on the current playback progress, and directly uploads the user's interaction information and an identifier of the determined segment when uploading data to the server terminal. In this way, the server terminal can make statistics based on segment identifiers when conducting statistics. Specifically, in a specific implementable technical solution, "send the user's interaction data for a segment of the audio/video to the server terminal according to the interaction information and the playback progress" in 104 above may specifically include:
1041: Send the interaction information and the playback progress to a server terminal as the interaction data, to cause the server terminal to determine a target segment of the audio/video for the interaction information based on the playback progress; or
1042: Determine the target segment of the audio/video according to the playback progress, and send the interaction information and a segment identifier of the target segment to the server terminal as the interaction data.

The segments of the audio/video in this embodiment can be partitioned by the server terminal, that is, data corresponding to the audio/video includes segment partitioning information. Further, in some embodiments, after the client terminal determines the interaction information generated by the user triggering the interactive control and the corresponding playback progress when the user triggers the interactive control, the client terminal can directly send the interaction information and the playback progress to the server terminal as the interaction data. Based on the received playback progress, such as a playback time moment (e.g., 2 minutes and 24 seconds) or a frame identifier corresponding to the audio/video when the user triggers the interactive control, the server terminal obtains a segment at the playback time moment or where the frame identifier is located from segment information in the audio/video data. The segment at the playback time moment or where the frame identifier is located is a target segment of the audio/video for which the interaction information is made.

In other embodiments, the server terminal may transmit streaming media data corresponding to the audio/video to the client terminal, and the streaming media data may include segment partitioning information. After determining interaction information generated by the user triggering the interactive control and the corresponding playback progress when the user triggers the interactive control, the client terminal can also determine a segment where the playback progress is located (such as a playback time moment or a frame identifier) based on the playback progress, and then send interaction information and the frame identifier of the segment (i.e. a target segment) as the interaction data to the server terminal. This embodiment does not specifically limit the content included in the interaction data that is sent from the client terminal to the server, terminal as long as the server terminal can determine the target segment of the audio/video for which the interaction information is made based on the interaction data.

Regarding the above specific implementations of segmentation of audio/video by the server terminal, reference can be made to the relevant content in the following embodiments of an interaction method provided by the present application with a server terminal as an execution subject, and is not described in detail here.

Further, in response to the interactive operation triggered by the user through the interactive control, the client device can, in addition to determining the interaction information and the playback progress when the interactive operation is triggered, also display an animation effect corresponding to the interactive operation on the playback interface of the audio/video. The animation effect corresponding to the interactive operation may include, but is not limited to, one or a combination of an audio, a text, and an image. For example, as shown in FIG. 2, the interactive control 01 being a like control is used as an example. After the user triggers such thumb-shaped like control, an animation effect having a heart picture with a "like" text, etc., as shown in FIG. 2, is displayed around the thumb-shaped like control, or another animation, such as an animation effect that the like control first shrinks and then expands, etc., is made. Furthermore, if the user clicks the like control multiple times in succession, the animation effect may also include the text content indicating the consecutive number of likes given by the user. This embodiment does not specifically limit the animation effect.

In summary, the technical solution provided by this embodiment displays an interactive control that reflects a playback progress in a playback interface that plays an audio/video. A user can trigger an interactive operation on a video segment through the interactive control, which facilitates the establishment of a relationship between a user interaction and the audio/video segment. Furthermore, after the client terminal responds to the interactive operation triggered by the user through the interactive control, the client terminal can determine interaction information and a playback progress when the interactive operation is triggered, and send the user's interaction data for the audio/video segment to the server terminal based on the interaction information and playback progress, so that the server terminal can obtain respective interaction data triggered and generated by different users for different segments of the audio/video. This helps the server terminal to subsequently provide data support for determining user interaction popularities corresponding to different segments of the audio/video.

The above content describes an audio/video interaction solution provided by the embodiments of the present application from the perspective of a client terminal. The following introduces an audio/video interaction solution provided by the embodiments of the present application from the perspective of a server terminal.

Specifically, an embodiment of the present application also provides an interaction method. An execution subject of this interactive solution is the server terminal as shown in FIG. 3. The server terminal may be, but is not limited to, a single server, a server group composed of multiple functional servers, a virtual server, or a cloud, etc. FIG. 4 shows a schematic flowchart of an interaction method provided by an embodiment of the present application. As shown in FIG. 4, the interaction method may include the following steps:
201: Obtain interaction data triggered by different users for different segments of an audio/video, and obtain an interaction data set related to the audio/video.
202: Determine user interaction popularities corresponding to the different segments of the audio/video based on the interaction data set.
203: Generate streaming media data of the audio/video based on the user interaction popularities corresponding to the different segments of the audio/video and audio/video data of the audio/video, to enable a client device to display perceptible information reflecting the user interaction popularities corresponding to the different segments of the audio/video in a playback interface of the audio/video on the streaming media data that is downloaded.

In 201 above, the interaction data is determined by the client device based on the user's interaction information and the playback progress corresponding to the interactive operation after the user triggers the interactive operation on the interactive control on the playback interface of the video. Specifically, as described in the foregoing embodiments, after determining the interaction information and the playback progress, the client terminal can directly send the interaction information and the playback progress to the server terminal. The execution subject, i.e., the server terminal, of this embodiment determines a segment identifier of a target segment of the audio/video at which the interaction information is aimed based on the playback progress. Alternatively, after the client terminal determines the target segment of the audio/video corresponding to the playback progress, the client terminal sends the interaction information and the segment identifier of the target segment to the server terminal. After receiving respective interaction data that is triggered and generated by different users for different segments of the audio/video and sent by different client devices, the server terminal can obtain an interaction data set related to the audio/video. When performing the above step 202, a statistical analysis can be performed directly on interaction information (such as like data, comment data, etc.) corresponding to different segments of the audio/video based on the interaction data set to determine the number of likes and/or the number of comments corresponding to different segments, so as to determine user interaction popularities corresponding to different segments of the audio/video based on the number of likes and/or the number of comments. It needs to be noted that: specific implementations of determining, by the client terminal, the target segment of the audio/video for which the interaction information is made based on the playback progress can be referenced to the relevant content of the foregoing embodiments.

When the client device directly sends the determined interaction information and the determined playback progress to the server terminal, the interaction data obtained by the server at this time also includes the interaction information and the playback progress. In order to facilitate subsequent statistics of corresponding user interaction popularities of audio/video segments, the server terminal needs to determine a target segment of the audio/video for which the interaction information is directed based on the received playback progress, so as to use the interaction information and an identifier of the target segment to build an interaction data set related to the audio/video, and then realize determining the user interaction popularities corresponding to different segments of the audio/video based on the interaction data set through the above step 202. Based thereon, the method provided in this embodiment further includes:
A11: Receive interaction information and playback progress(es) sent by the client device for the audio/video.
A21: Determine the target segment(s) for which the interaction information is directed according to the playback progress(es).

Regarding specific implementations of A11 to A21, referenced can be made to the relevant content of the foregoing embodiments, and is not described in detail here.

In the above, a prerequisite for the server terminal to determine the user interaction popularities corresponding to different segments of the audio/video based on the interaction data set is that the audio/video data of the audio/video stored in the server terminal includes segment partitioning information of the audio/video. The segment partitioning information may be obtained after the server terminal partitions the audio/video into segments based on its own built-in related algorithm. To this end, the interaction method provided in this embodiment may also include the following steps:
A21: Partition the audio/video into segments to obtain segment partitioning information of the audio/video.
A22: Add the segment partitioning information of the audio/video to audio/video data of the audio/video.

In the above A21, the audio/video are partitioned into segments. A relatively simple implementation method may be to directly partition the audio/video into multiple segments with equal playback duration at equal intervals. This segment partitioning method uses duration as segment partitioning information. However, considering that the structure of audio/video content is generally composed of scenes and shots, a shot refers to a video clip captured continuously by a camera, and a scene refers to a video clip composed of multiple semantically related consecutive shots that can express common semantic content. If the audio/video is directly partitioned according to equal intervals, there may exist an audio/video clip having an incomplete expression of the content. This can easily cause a sense of discontinuity in audio content and a poor audio and video experience to a user when user drags a progress indicator to jump to an audio/video segment to the clip he/she wants to view and is viewing. To this end, in another implementable technical solution, this embodiment provides scene segmentation of audio/video according to audio/video content of the audio/video to obtain multiple sets of segments corresponding to scene segmentation sequences. This segment partitioning method is to use a start frame and an end frame of each segment as segment partitioning information.

When an audio/video is segmented into scenes, most existing solutions perform semantic segmentation of scenes based on frame data of the audio/video (i.e., image data). Specifically, a process of scene segmentation based on audio/video frame data includes: using visual feature information of audio/video and by analyzing degrees of similarity between adjacent frames of the video, first segmenting shots, and then combining related shots based on a correlation between the shots to form a scene with certain semantics, thereby completing scene semantic segmentation.

The technical solution provided by this embodiment considers that sound is also an important component of audio/video, and can also provide a large amount of effective information for separating and segmenting audio/video. For example, a scene in a TV series with background music, a set of dialogue scenes, a set of monologue scenes, and a set of commentary all revolve around a plot or theme. For this reason, sound information can also be used as an important reference for audio/video scene segmentation. In addition to sound information, the popularity of audio/video is also another important component of audio/video. For example, a playback status of an audio/video segment on the server terminal (such as skip, fast forward, normal play, multiple plays) and a user's real-time comment information (such as bullet comment) can reflect the popularity information of this video segment, which can also be used as an important basis for audio/video scene segmentation. Based on this, in order to improve the accuracy of audio/video scene segmentation, this embodiment integrates audio/video frame data, sound information, popularity, etc. to achieve semantic segmentation of audio/video scenes.

It needs to be noted here that: in this embodiment, there is no limitation on specific implementations of scene semantic segmentation of audio/video. Reference can be made to the description in relevant literature, and is not redundantly described here.

Based on the above content, possible implementation methods of "partition the audio/video into segments to obtain segment partitioning information of the audio/video" in A21 above can include any of the following:
A211: Partition the audio/video into multiple segments with equal playback duration according to equal intervals, and use the duration as the segment partitioning information; or
A212: Perform scene segmentation on the audio/video according to audio/video content of the audio/video to obtain segments corresponding to multiple sets of scene segmentation sequences, and use a start frame and an end frame of each segment as the segment partitioning information.

Specific implementations of the above A211 and A212 can be referenced to the above related content.

In 203 above, after obtaining user interactions corresponding to different audio/video segments, audio/video streaming data can be generated based on user interaction popularities corresponding to different audio/video segments and audio/video data, so that the client device can download the streaming media data from the server terminal, and display perceptible information reflecting the user interaction popularities corresponding to different audio/video segments in an audio/video playback interface during an audio/video playback process. Specifically, the perceptible information may be in color but not in color, and the perceptible information may be displayed through a progress bar. For example, the colors of different gray levels displayed by different buffered segments 03 of the buffering progress bar 02 shown in FIG. 3 are user interaction popularities corresponding to different segments that have been buffered and are to be played. The colors of different gray levels displayed by these different buffered segments 03 can help the user to selectively watch the video to be played.

In the technical solution provided by this embodiment is to obtain an interaction data set related to audio/video based on obtained interaction data triggered by different users for different segments of the audio/video. User interaction popularities corresponding to different segments of the audio/video can be determined based on the interaction data set, and streaming media data of the audio/video can further be generated based on the user interaction popularities corresponding to different segments of the audio/video and audio/video data of the audio/video. This enables the client terminal to display perceptible information that reflects the user interaction popularities corresponding to different segments of the audio/video on a playback interface of the audio/video based on the streaming media data that is downloaded. The perceptible information displayed on the client terminal and reflecting the user interaction popularities corresponding to different segments of the audio/video can help the user to clear about the popularities of different segments of the audio/video, help provide an auxiliary reference for the user to browse the audio/video, thus avoiding blindly fast-forwarding of the audio/video, and missing out the parts that he/she is interested in. Moreover, to a certain extent, this will also help to increase the number of times of playing the audio/video, the number of times of playing the content, and other indicators.

An embodiment of the present application also provides an interaction system. A structure of the interaction system is shown in FIG. 3. Specifically, the interaction system includes: a client terminal 100 and a server terminal 200, wherein:
the client terminal 100 configured to play an audio/video; display an interactive control reflecting a playback progress in a playback interface of the audio/video; determine, in response to an interactive operation triggered by a user through the interactive control, interaction information and the playback progress when the interactive operation is triggered; and send the user's interaction data for a segment of the audio/video to a server based on the interaction progress and the playback progress; and
the server terminal 200 configured to obtain interaction data triggered by different users for different segments of the audio/video, and obtain an interaction data set related to the audio/video; determine user interaction popularities corresponding to the different segments of the audio/video based on the interaction data set; and generate streaming media data of the audio/video based on the user interaction popularities corresponding to the different segments of the audio/video and audio/video data of the audio/video, to enable the client device to display perceptible information reflecting the user interaction popularities corresponding to the different segments of the audio/video in the playback interface of the audio/video based on the streaming media data that is downloaded.

It needs to be noted here that the interaction system provided by the above embodiment can implement the technical solutions described in the foregoing method embodiments. Specific implementation principles of each of the above modules or units can be found in corresponding content in corresponding foregoing method embodiments, which are not repeatedly described herein.

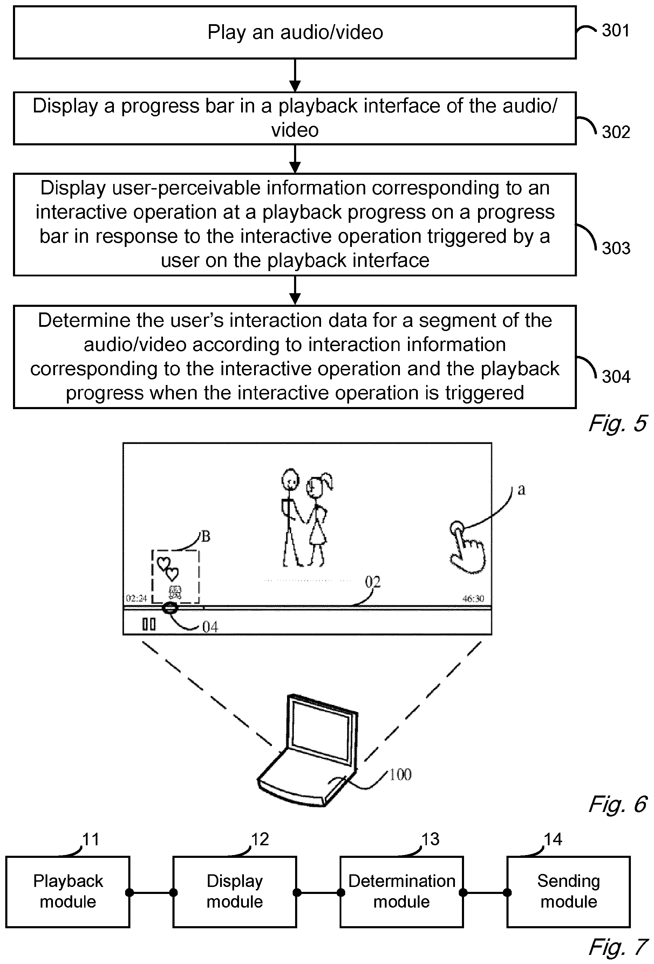

In the above content, when elaborating on determining the interaction information (such as like information) triggered by the user for a segment of the audio/video, it is mainly described from the perspective that the playback interface of the audio/video has the interactive control that can reflect the playback progress (such as the interactive control moving along with the progress indicator). In other possible technical solutions, the playback interface of the audio/video does not need to have interactive controls. The user triggers an interactive operation through the playback interface (such as double-clicking the playback interface), and an animation effect corresponding to the interactive operation is displayed on the progress bar according to the playback progress, so that the user can know clearly that he/she has triggered an interaction with the audio/video segment to which the current playback progress belongs. Alternatively, the interactive control (such as a like control) does not move, and is displayed at a fixed position. After the user clicks the interactive control, user-perceivable information can be displayed at the playback progress on the progress bar, allowing the user to see or hear the effect triggered by the interactive operation on this segment. For this type of application scenario, an embodiment of the present application also provides an interaction method. A process of execution of this interaction method is shown in the schematic flowchart of FIG. 5. An execution subject of the method is a client terminal, which may be, but is not limited to, a personal computer, a tablet computer, a smart phone, etc. Specifically, as shown in FIG. 5, the interaction method may include the following steps:
301: Play an audio/video.
302: Display a progress bar in a playback interface of the audio/video.
303: Display user-perceivable information corresponding to an interactive operation at a playback progress on a progress bar in response to the interactive operation triggered by a user on the playback interface.
304: Determine the user's interaction data for a segment of the audio/video according to interaction information corresponding to the interactive operation and the playback progress when the interactive operation is triggered.

Regarding specific implementations of the above 301, 302 and 304, reference can be made to relevant content of the foregoing embodiments, and they are not repeatedly described herein.

For 303 above, the interactive operation triggered by the user on the playback interface may be, but is not limited to, an operation of double-clicking at any position on the playback interface; or may be an operation that triggers a fixed interactive control set on the playback interface, which is not limited herein. The user-perceivable information corresponding to the interactive operation displayed by the client terminal at the playback progress on the progress bar in response to the interactive operation triggered by the user on the playback interface may be the animation effect corresponding to the interactive operation. The animation effect may be, but is not limited to, such as a "like" audio, a "like" picture animation, etc., which is not limited herein. Through this animation effect, the user can make it clear that he/she has triggered an interaction with an audio/video segment to which the current playback progress belongs.

For example, as shown in FIG. 6, if the user feels that the content currently being played is very interesting or that actors in the video are very good at acting while watching the audio/video, he/she double-clicks at a position a on the playback interface, triggering an operation, such as giving a like, for the current playback progress of the playback content. In response to the double-click "like" operation triggered by the user, the client terminal displays an animation effect B as shown in FIG. 6 at a position of the playback progress on the progress bar (that is, at the ear position where the progress indicator 04 is located as shown in FIG. 6). in other words, at the position of the playback progress on the progress bar, user-perceivable information corresponding to the user's interactive operation is displayed, which can indicate that the user has given a like on the audio/video segment to which the current playback progress belongs.

FIG. 7 shows a schematic structural diagram of an interaction apparatus provided by an embodiment of the present application. As shown in FIG. 7, the apparatus includes: a playback module 11, a display module 12, a determination module 13, and a sending module 14, wherein:
the playback module 11 is configured to play an audio/video;
the display module 12 is configured to display an interactive control reflecting a playback progress in a playback interface of the audio/video;
the determination module 13 is configured to determine, in response to an interactive operation triggered by a user through the interactive control, interaction information and a playback progress at the time when the interactive operation is triggered;
the sending module 14 is configured to send the user's interaction data for a segment of the audio/video to a server terminal based on the interaction information and the playback progress, to enable the server to obtain respective interaction data triggered by different users for different segments of the audio/video.

Furthermore, the apparatus provided in this embodiment further includes: a presentation module configured to present a progress bar and a progress indicator that moves on the progress bar to reflect the playback progress in the playback interface of the audio/video, wherein the display module 12 is further configured to display the interactive control being linked with the progress indicator.

Furthermore, when being configured to display the interactive control being linked with the progress indicator, the display module 12 is specifically configured to: display the interactive control around the progress indicator; obtain a moving speed and a moving direction of the progress indicator; and control the interactive control to move according to the moving speed and the moving direction.

Furthermore, the apparatus provided in this embodiment further includes: an acquisition module configured to obtain buffered data corresponding to the audio/video in a buffer. The determination module 13 is further configured to determine at least one buffered segment of a buffering progress bar and a display attribute of the buffered segment based on the buffered data, and wherein the display attribute is related to a user interaction popularity. The display module is further configured to display the buffering progress bar of the at least one buffered segment on the progress bar according to rules of different display methods corresponding to different display attributes.

Furthermore, the buffered data includes at least one segment to be played and information representing a user interaction popularity corresponding to the segment to be played. Correspondingly, when determining the at least one buffered segment of the buffering progress bar and the display attribute of the buffered segment based on the buffered data, the determination module 13 is specifically configured to: determine a length of the buffered segment corresponding to the segment to be played based on a data amount of the at least one segment to be played; and determine a corresponding display attribute of the buffered segment based on information that represents a user interaction popularity corresponding to the segment to be displayed and is included in the buffer data.

Furthermore, when sending the user's interaction data for the segment of audio/video to the server terminal based on the interaction information and the playback progress, the sending module is specifically configured to: use the interaction information and the playback progress as the interaction data to the server terminal, to allow the server to determine a target segment for which the interaction information is directed based on the playback progress; or determine the target segment of the audio/video based on the playback progress, and send the interaction information and a segment identifier of the target segment to the server terminal as the interaction data.

Furthermore, the apparatus provided in this embodiment further includes: a response module configured to respond to the interactive operation triggered by the user through the interactive control, and display an animation effect corresponding to the interactive operation on the playback interface of the audio/video.

It needs to be noted here that the interaction apparatus provided by the foregoing embodiments can implement the technical solutions described in the foregoing embodiments of the interaction method shown in FIG. 1. Specific implementation principles of each of the above modules or units can be referenced to relevant content of the above interaction method shown in FIG. 1, and are not be described again here.

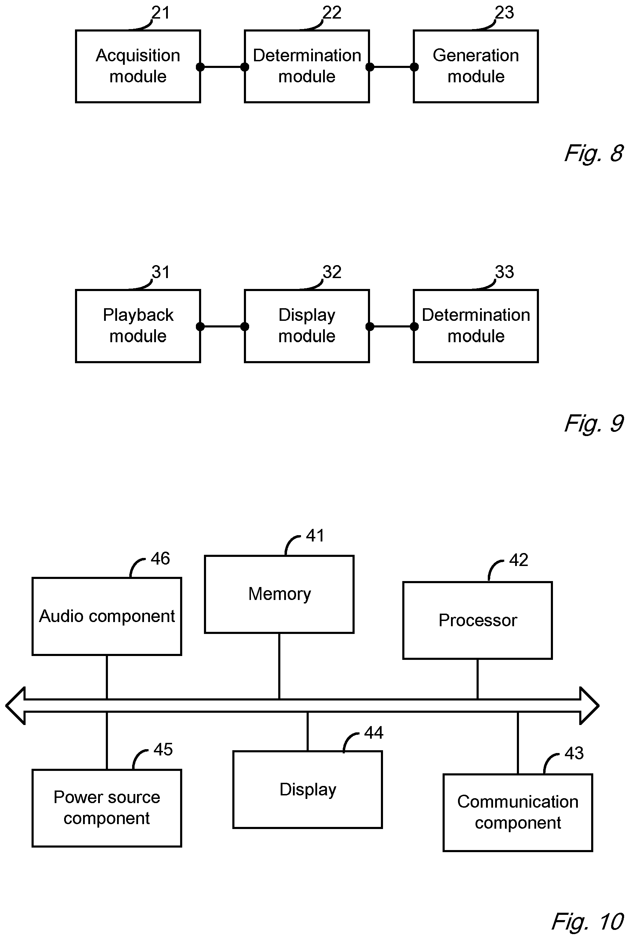

FIG. 8 shows a schematic structural diagram of an interaction apparatus provided by another embodiment of the present application. As shown in FIG. 8, the graph interaction apparatus includes: an acquisition module 21, a determination module 22, and a generation module 23, wherein:
the acquisition module 21 is configured to obtain respective interaction data triggered by different users for different segments of an audio/video, and obtain an interaction data set related to the audio/video;
the determination module 22 is configured to determine user interaction popularities corresponding to the different segments of the audio/video according to the interaction data set; and
the generation module 23 is configured to generate streaming media data of the audio/video based on the user interaction popularities corresponding to the different segments of the audio/video and audio/video data of the audio/video, to enable the client device to display perceptible information that reflects the user interaction popularities corresponding to the different segments of the audio/video in a playback interface of the audio/video based on the streaming media data that is downloaded.

Furthermore, the interaction apparatus provided by this embodiment also includes: a receiving module configured to receive interaction information and playback progress(es) sent by a client terminal for the audio/video. The determination module 22 is further configured to determine, based on the playback progress(es), target segment(s) for which the interaction information is directed.

Furthermore, the interaction apparatus provided by this embodiment further includes: a partitioning module configured to partition the audio/video into segments to obtain segment partitioning information of the audio/video; and an adding module configured to add the segment partitioning information into the audio/video data of the audio/video.

Furthermore, when partitioning the audio/video into the segments to obtain the segment partitioning information of the audio/video, the partitioning module specifically uses any one of the following: partitioning the audio/video into multiple segments with equal playback duration according to equal intervals, and using the duration as the segment partitioning information; or performing scene segmentation on the audio/video according to audio/video content of the audio/video to obtain segments corresponding to multiple sets of scene segmentation sequences, and using a start frame and an end frame of each segment as the segment partitioning information.

It needs to be noted here that the image processing apparatus provided by the above embodiments can implement the technical solution described in the above interaction method embodiment shown in FIG. 4. Specific implementation principles of each of the above modules or units can be referenced to relevant content of the above interaction method embodiment shown in FIG. 4, and are not described again here.

Yet another embodiment of the present application provides an interaction apparatus. A structure of the interaction apparatus is shown in FIG. 9, and includes: a playback module 31, a display module 32, and a determination module 33, wherein:
the playback module 31 is configured to play an audio/video;
the display module 32 is configured to display a progress bar in a playback interface of the audio/video; and display in response to an interactive operation triggered by a user on the playback interface, user-perceivable information corresponding to the interactive operation at a position of playback progress on the progress bar; and
the determination module 33 is configured to determine the user's interaction data for a segment of the audio/video based on interaction information corresponding to the interactive operation and a playback progress when the interaction operation is triggered.

It needs to be noted here that the interaction apparatus provided by the above embodiments can implement the technical solution described in the above embodiments of the interaction method shown in FIG. 5. Specific implementation principles of each of the above modules or units can be referenced to relevant content of the above interaction method embodiment shown in FIG. 5, and are not described again here.

FIG. 10 shows a schematic diagram of a conceptual structure of an electronic device provided by an embodiment of the present application. The electronic device includes a processor 42 and a memory 41. The memory 41 is configured to store one or more computer instructions. The processor 42 is coupled to the memory 41, and is configured to implement the steps in each of the above interaction method embodiments using the one or more computer instructions (such as computer instructions for implementing data storage logic).

The memory 41 may be implemented by any type of volatile or non-volatile storage device or a combination thereof, such as static random access memory (SRAM), electrically erasable programmable read-only memory (EEPROM), erasable programmable read-only memory (EEPROM), programmable read-only memory (EPROM), programmable read-only memory (PROM), read-only memory (ROM), magnetic memory, flash memory, magnetic or optical disk.

Furthermore, as shown in FIG. 10, the electronic device also includes other components, such as a communication component 43, a power source component 45, a display 44, etc. FIG. 10 only schematically shows some components, but this does not mean that the electronic device only includes those components shown in FIG. 10.

Another embodiment of the present application provides a computer program product (no corresponding drawing is shown in the accompanying drawings of the disclosure). The computer program product includes a computer program or instructions that, when executed by a processor, enable the processor to implement the steps in each of the above method embodiments.

Correspondingly, embodiments of the present application also provide a computer-readable storage medium storing a computer program. When the computer program, when executed by a computer, can implement the method steps or functions provided by the above embodiments.

The apparatus embodiments described above are only illustrative. The units described as separate components may or may not be physically separated. The components shown as units may or may not be physical units, i.e., they may be located in one place, or can be distributed across multiple network units. Some or all of the modules can be selected according to actual needs to achieve the purposes of the solutions of the embodiments of this disclosure. One of ordinary skill in the art can understand and implement the methods without making any creative effort.

Through the description of the above embodiments, one skilled in the art can clearly understand that each embodiment can be implemented by means of software plus a necessary general hardware platform, and can apparently also be implemented by hardware. Based on this understanding, the parts of the above technical solutions that essentially contribute to the existing technologies can be embodied in a form of a software product. Such computer software product can be stored in a computer-readable storage medium, such as ROM/RAM, a magnetic disk, an optical disk, etc., and includes a number of instructions to cause a computer device (which can be a personal computer, a server, or a network device, etc.) to execute the methods described in various embodiments or certain parts of the embodiments.

Finally, it needs to be noted that the above embodiments are only used to illustrate the technical solutions of the present application, but are not meant to limit them. Although the present application has been described in detail with reference to the foregoing embodiments, one of ordinary skill in the art should understand that modifications can still be made to the technical solutions described in the foregoing embodiments, or equivalent replacements can be made to some of the technical features. However, these modifications or replacements do not cause the essence of the corresponding technical solutions to deviate from the spirit and scope of the technical solutions in the embodiments of the present application.

## Claims

1. An interaction method comprising:
playing an audio/video;
displaying an interactive control reflecting a playback progress in a playback interface of the audio/video;
determining, in response to an interactive operation triggered by a user through the interactive control, interaction information and a playback progress when the interactive operation is triggered; and
sending the user's interaction data for a segment of the audio/video to a server terminal based on the interaction information and the playback progress, to allow the server to obtain interaction data triggered by different users for different segments of the audio/video.

2. The method according to claim 1, further comprising:
displaying a progress bar and a progress indicator that moves on the progress bar for reflecting the playback progress in the playback interface of the audio/video; and
displaying the interactive control to be linked with the progress indicator.

3. The method according to claim 2, wherein displaying the interactive control to be linked to the progress indicator comprises:
displaying the interactive control around the progress indicator;
obtaining a moving speed and a moving direction of the progress indicator; and
controlling the interactive control to move according to the moving speed and the moving direction.

4. The method according to any one of claims 1 to 3, further comprising:
obtaining buffered data corresponding to the audio/video in a buffer;
determining at least one buffered segment of a buffering progress bar and a display attribute of the buffered segment based on the buffered data, wherein the display attribute is related to a user interaction popularity; and
displaying the buffering progress bar with the at least one buffered segment on the progress bar based on rules of different display methods that correspond to different display attributes.

5. The method according to claim 4, wherein the buffered data comprises at least one segment to be played and information representing a user interaction popularity corresponding to the segment to be played, wherein determining the at least one buffered segment of the buffering progress bar and the display attribute of the buffered segment based on the buffered data comprises:
determining a length of the buffered segment corresponding to the segment to be played based on a data amount of the at least one segment to be played included in the buffered data; and
determining the display attribute of the buffered segment based on information included in the buffered data that represents the user interaction popularity corresponding to the segment to be played.

6. The method according to any one of claims 1 to 5, wherein sending the user's interaction data for the segment of the audio/video to the server terminal based on the interaction information and the playback progress comprises:
sending the interaction information and the playback progress to the server terminal as the interaction data, to allow the server terminal to determine a target segment of the audio/video based on the playback progress; or
determining the target segment of the audio/video based on the playback progress, and sending the interaction information and a segment identifier of the target segment to the server terminal as the interaction data.

7. The method according to any one of claims 1 to 6, further comprising:
displaying an animation effect corresponding to the interactive operation on the playback interface of the audio/video in response to the interactive operation triggered by the user through the interactive control.

8. An interaction method comprising:
obtaining interaction data triggered and generated by different users for different segments of audio/video to obtain an interaction data set related to the audio/video;
determining user interaction popularities corresponding to the different segments of the audio/video based on the interaction data set; and
based on the user interaction popularities corresponding to the different segments of the audio/video and audio/video data of the audio/video generating streaming media data of the audio/video, to enable a device of a client terminal to display perceptible information reflecting the user interaction popularities corresponding to the different segments of the audio/video in a playback interface of the audio/video, based on the streaming media data that is downloaded.

9. The method according to claim 8, further comprising:
receiving interaction information and a playback progress sent by the client terminal for the audio/video; and
determining a target segment for which the interaction information is directed based on the playback progress.

10. The method according to claim 8, further comprising:
partitioning the audio/video into segments to obtain segment partitioning information of the audio/video; and
adding segment partitioning information of the audio/video to the audio/video data of the audio/video.

11. The method according to claim 10, wherein partitioning the audio/video into the segments to obtain the segment partitioning information of the audio/video comprises any one of the following:
partitioning the audio/video into multiple segments with equal playback duration according to equal intervals, and using the duration as the segment partitioning information; or
performing a scene segmentation on the audio/video to obtain segments corresponding to multiple sets of scene segmentation sequences based on audio/video content of the audio/video, and using a start frame and an end frame of each segment as the segment partitioning information.

12. An interaction system comprising:
a client terminal configured to play an audio/video; display an interactive control reflecting a playback progress in a playback interface of the audio/video; determine, in response to an interactive operation triggered by a user through the interactive control, interaction information and the playback progress when the interactive operation is triggered; and send the user's interaction data for a segment of the audio/video to a server based on the interaction progress and the playback progress; and
a server terminal configured to obtain interaction data triggered by different users for different segments of the audio/video, and obtain an interaction data set related to the audio/video; determine user interaction popularities corresponding to the different segments of the audio/video based on the interaction data set; and generate streaming media data of the audio/video based on the user interaction popularities corresponding to the different segments of the audio/video and audio/video data of the audio/video, to enable the client device to display perceptible information reflecting the user interaction popularities corresponding to the different segments of the audio/video in the playback interface of the audio/video based on the streaming media data that is downloaded.

13. An interaction method comprising:
playing an audio/video;
displaying a progress bar in a playback interface of the audio/video;
displaying, in response to an interactive operation triggered by a user on the playback interface, user-perceivable information corresponding to the interactive operation at a position of playback progress on the progress bar; and
determining the user's interaction data for a segment of the audio/video according to interaction information corresponding to the interactive operation and the playback progress when the interactive operation is triggered.

14. An electronic device comprising: a processor and a memory, wherein:
the memory is configured to store one or more computer instructions;
the processor is coupled to the memory, and configured to execute the one or more computer instructions to implement the steps in the method of any one of claims 1 to 7, or to implement the steps in the method of any one of claim 8 to 11, or to implement the steps in the method of claim 12.

15. A computer-readable storage medium, wherein instructions in the storage medium, when executed by a processor of an electronic device, enable the electronic device to perform the steps in the method of any one of claims 1 to 7, or to perform the steps in the method of any one of claim 8 to 11, or to perform the steps in the method of claim 12.

16. A computer program product, wherein instructions in the computer program product, when executed by a processor of an electronic device, enable the electronic device to perform the steps in the method of any one of claims 1 to 7, or to perform the steps in the method of any one of claim 8 to 11, or to perform the steps in the method of claim 12.
